# EUROPÄISCHE PATENTSCHRIFT

(11) **EP 3 658 391 B1**
(45) Veröffentlichungstag und Bekanntmachung des Hinweises auf die Patenterteilung: **27.04.2022**
(21) Anmeldenummer: 18724167.4
(22) Anmeldetag: 03.05.2018
(51) Int. Cl.: B60C 11/12

(54) **LAUFSTREIFENPROFIL EINES FAHRZEUGREIFENS**
TREAD PROFILE OF A VEHICLE TYRE
PROFILÉ DE BANDE DE ROULEMENT D'UN PNEU DE VÉHICULE

(30) Priorität: 25.07.2017 DE 102017212713
(43) Veröffentlichungstag der Anmeldung: 03.06.2020
(73) Patentinhaber: Continental Reifen Deutschland GmbH, 30165 Hannover (DE)
(72) Erfinder: BERGER, Christoph, 30173 Hannover (DE); BAUER, Claudia, 31542 Bad Nenndorf (DE); WIESE, Klaus, 30559 Hannover (DE)
(74) Vertreter: Continental Corporation
(86) Internationale Anmeldenummer: PCT/EP2018/061260
(87) Internationale Veröffentlichungsnummer: WO 2019/020232

(56) Entgegenhaltungen:
- WO-A1-2008/065947
- WO-A1-2011/091870
- JP-A- 2014 046 743
- US-A1- 2008 185 085
- US-A1- 2010 078 107
- US-A1- 2012 018 069

## Beschreibung

Die Erfindung betrifft ein Laufstreifenprofil eines Fahrzeugreifens - insbesondere eines PKW-Fahrzeugreifens - mit durch Rillen voneinander getrennten Profilelementen, die nach radial außen von einer radial äußeren Oberfläche begrenzt werden, und mit in Profilelementen ausgebildeten Feineinschnitten, die längs einer in der radial äußeren Oberfläche erstreckten ersten Haupterstreckungsrichtung und längs einer ausgehend von der radial äußeren Oberfläche nach radial innen erstreckten zweiten Haupterstreckungsrichtung erstreckt ausgebildet sind und jeweils in radialer Richtung R nach innen hin von einem Feineinschnittgrund begrenzt werden, wobei der Feineinschnitt ausgehend von der radial äußeren Oberfläche bis in eine Tiefe T₁ jeweils längs seiner Erstreckung längs der ersten Haupterstreckungsrichtung zumindest in einem Erstreckungsbereich aus in alternierender Abfolge hintereinander angeordneten ersten Erstreckungsabschnitten und zweiten Erstreckungsabschnitten ausgebildet ist.

Derartige Fahrzeugluftreifen sind bekannt.

Es ist bekannt Fahrzeugluftreifen für Personenkraftwagen (Pkw) mit Laufstreifenprofilen mit durch Umfangsrillen voneinander getrennten Profilblockreihen auszubilden, in welchen in Umfangsrichtung hintereinander angeordnete Profilblockelemente jeweils durch Querrillen voneinander getrennt sind. Die Querrillen und die Umfangsrillen ermöglichen eine Entwässerung des Laufstreifenprofils beim Abrollen auf nassen Straßenoberflächen. Zusätzlich bilden die durch die Querrillen gebildeten Profilblockkanten Griffkanten zum Griff auf Nässe und Schnee.

Von Winterreifen ist es bekannt, in den Profilblockelementen zusätzliche in axialer Richtung verlaufende Feineinschnitte auszubilden, welche in die die Profilblockelemente begrenzenden Umfangsrillen münden. Die Feineinschnitte ermöglichen dabei, beim Abrollen durch Öffnen und Schließen des Feineinschnitts ein Aufnehmen und zusätzliches Verdichten des Schnees und bilden darüber hinaus zusätzliche Griffkanten zum besseren Griff in Umfangsrichtung auf Schnee. Dabei ist es für manche Einsatzfälle auch besonders wünschenswert, eine möglichst lange wirksame Griffkante zu erzeugen und den Feineinschnitt möglichst tief auszubilden, um die Griffwirkung auf Schnee möglichst umfassend nutzen zu können. Die Ausbildung der Feineinschnitte in den Profilblockelementen bedingt dabei jedoch eine Reduktion der Steifigkeit der Profilblockelemente und eine Aufweichung der Profilblockelemente, wodurch die Trockengriffeigenschaften eingeschränkt werden. Die Ausbildung von besonders großer Griffkantenlänge und großer Tiefe des Feineinschnittes erhöht dabei die aufweichende Wirkung.

Es ist bekannt, zur Erzielung derartiger langer Griffkanten die Feineinschnitte längs ihrer Erstreckung in der radial äußeren Oberfläche mit einem zickzack-förmigen oder wellenförmigen Verlauf auszubilden. Hierdurch kann die wirksame Griffkantenlänge zur Übertragung von Kräften in Umfangsrichtung erhöht und darüber hinaus zusätzliche wirksame Griffkanten in Querrichtung ermöglicht werden. Somit kann durch diese Ausbildung eine gute Griffwirkung auf Schnee zur Erzielung guter Traktions- und Bremseigenschaften und auch zur Verbesserung der Handling-Eigenschaften auf Schnee ermöglicht werden. Die durch diese bekannten Feineinschnitte erzielbaren großen wirksamen Griffkantenlängen im Umfangsrichtung und in Querrichtung ermöglichen zwar gute Griffwirkung auf Schnee zur Erzielung guter Traktions,- Brems- und Handling-Eigenschaften und auch ein gutes Öffnen und Schließen der Feineinschnitte, so dass die Aufnahme und Verdichtung des Schnees zur Verbesserung der Schnee-Schnee-Reibung gut ausgebildet werden kann. Allerdings ist auch bei diesen Ausbildungen durch die langen wirksamen Feineinschnitte noch der Nachteil der noch unerwünscht hohen Steifigkeitsreduktion verbunden, wodurch die Trockeneigenschaften noch unerwünscht beeinträchtigt werden.

Es ist auch bekannt, derartige mit in der radial äußeren Oberfläche mit wellen- oder zickzack-förmigem Verlauf ausgebildete Feineinschnitte auch zusätzlich längs ihrer radialen Erstreckung mit mehr oder weniger stark ausgeprägtem zickzack-förmigem Verlauf und somit den Feineinschnitt mit einer dreidimensionalen Kontur auszubilden. Dabei sind die bekannten dreidimensional ausgebildeten Feineinschnitte im Wesentlichen auch längs der gesamten mit zickzack- oder wellenförmigem Verlauf ausgebildeten Erstreckung in der radial äußeren Oberfläche mit einem in radialer Richtung ausgebildeten zickzack-förmigem Verlauf ausgebildet, so dass diese zusätzliche längs der radialen Erstreckung ausgebildete zickzackförmige Konturierung an allen wesentlichen Erstreckungsabschnitten des Feineinschnittes auch zum Tragen kommt. Durch derartige bekannte dreidimensionale Ausbildungen von Feineinschnitten wird zwar die Steifigkeit des betroffenen Profilblockelementes teilweise deutlich erhöht, wodurch die Trockeneigenschaften des Reifens begünstigt werden. Allerdings ist eine derartige dreidimensionale Struktur über alle durch Zickzack- oder Wellen-Form längs der radial äußeren Oberfläche gebildeten Flächenabschnitte des Feineinschnittes hinweg einem guten Öffnen und Schließen des Feineinschnittes auf Schnee gerade bei Krafteinwirkung in Querrichtung abträglich. Die durch diese Ausbildung bedingte Behinderung des Öffnens und Schließens verzögert zumindest diesen Ablauf des Öffnens und Schließens besonders in Querrichtung. Die Ausbildung kann somit besonders Handling-Eigenschaften auf Schnee unerwünscht beschränken. Gerade bei besonders langen Feineinschnitten kommt dieser Effekt besonders zum Tragen.

Gerade für Winterreifen, die mit einem besonders weichen Laufstreifenprofil und/oder mit sehr weichen Laufstreifenmischungen ausgebildet werden sollen, wird hierdurch der Einsatz herkömmlicher Feineinschnitte beschränkt.

Aus der WO 2011/091870 A1 ist ein Laufstreifenprofil gemäß den Merkmalen des Oberbegriffs von Anspruch 1 bekannt.

Der Erfindung liegt daher die Aufgabe zugrunde, die Ausbildung von Fahrzeugluftreifen mit Feineinschnitten für Schneegriff mit hoher Steifigkeit zur Erzielung guter Trockeneigenschaften bereitzustellen, bei denen verbesserte Seitenkraftübertragung auf Schnee - zum Beispiel zur Erzielung verbesserter Handling-Eigenschaften - ermöglicht werden.

Die Aufgabe wird erfindungsgemäß durch die Ausbildung eines Laufstreifenprofils eines Fahrzeugreifens - insbesondere eines PKW-Fahrzeugreifens - mit durch Rillen voneinander getrennten Profilelementen, die nach radial außen von einer radial äußeren Oberfläche begrenzt werden, und mit in Profilelementen ausgebildeten Feineinschnitten, die längs einer in der radial äußeren Oberfläche erstreckten ersten Haupterstreckungsrichtung mit größter axialer Richtungskomponente und längs einer ausgehend von der radial äußeren Oberfläche nach radial innen erstreckten zweiten Haupterstreckungsrichtung erstreckt ausgebildet sind und jeweils in radialer Richtung R nach innen hin von einem Feineinschnittgrund begrenzt werden, wobei der Feineinschnitt ausgehend von der radial äußeren Oberfläche bis in eine Tiefe T₁ jeweils längs seiner Erstreckung längs der ersten Haupterstreckungsrichtung zumindest in einem Erstreckungsbereich aus in alternierender Abfolge hintereinander angeordneten ersten Erstreckungsabschnitten, in denen der Feineinschnitt längs seiner Erstreckung längs der ersten Haupterstreckungsrichtung mit einer größten Richtungskomponente seiner Erstreckung in Umfangsrichtung U ausgerichtet ist, und zweiten Erstreckungsabschnitten ausgebildet ist, in denen der Feineinschnitt längs seiner Erstreckung längs der ersten Haupterstreckungsrichtung mit einer größten Richtungskomponente seiner Erstreckung in axialer Richtung A ausgerichtet ist, gemäß den Merkmalen von Anspruch 1 gelöst, bei dem der Feineinschnitt in sämtlichen senkrecht zu seiner Erstreckung in der radial äußeren Oberfläche gebildeten Schnittebenen mit einer Schnittkontur ausgebildet ist, die im ersten Erstreckungsabschnitt jeweils ausgehend von der radial äußeren Oberfläche bis zur Tiefe T₁ hin im Wesentlichen geradlinig ist und die im zweiten Erstreckungsabschnitt aus wenigstens einem ersten radialen Erstreckungsabschnitt, in dem die Schnittkontur im Wesentlichen geradlinig in der zweiten Haupterstreckungsrichtung ausgerichtet ist, und mit wenigstens einem zweiten radialen Erstreckungsabschnitt ausgebildet ist, in dem die Schnittkontur eine in die zweite Haupterstreckungsrichtung ausgerichtete Richtungskomponente und eine senkrecht hierzu ausgerichtete Richtungskomponente aufweist, die längs der Erstreckung der Schnittkontur längs der zweiten Haupterstreckungsrichtung mit wechselnder Orientierung ausgebildet ist.

Durch diese Ausbildung wird ermöglicht, dass ein Fahrzeugreifen mit Feineinschnitten unter Nutzung der bekannten vorteilhaften Ausbildung eines Verlaufes mit längs der radial äußeren Oberfläche wechselnden ersten Erstreckungsabschnitten und zweiten Erstreckungsabschnitten, wobei die ersten Erstreckungsabschnitte ihre größte Erstreckungsrichtungskomponente in Umfangsrichtung und die zweiten Erstreckungsabschnitte eine größere Erstreckungsrichtungskomponente in axialer Richtung aufweisen, ausgebildet werden kann. Diese Ausbildung ermöglicht somit die Ausbildung der Feineinschnitte mit langen, wirksamen Griffkanten in Umfangs- und in axialer Richtung. Durch die Ausbildung der Schnittkontur im zweiten Erstreckungsabschnitt wird dabei eine dreidimensionale Ausbildung des Feineinschnittes unter Nutzung der Vorteile der dreidimensionalen Struktur zur Versteifung des Profilblockelementes gezielt umgesetzt. Dabei wird durch die Ausbildung der gezielten Versteifung längs des zweiten Erstreckungsabschnittes, aber ohne dreidimensionale Versteifung des ersten Erstreckungsabschnittes eine gezielte hauptsächlich in Umfangsrichtung gerichtete Versteifung bewirkt. Ein Öffnen und Schließen des Feineinschnittes ist dabei über den wesentlichen radialen Erstreckungsabschnitt des Feineinschnitts ungehindert und verzögerungsfrei möglich. Somit können durch die Ausbildung einer dreidimensionalen Struktur lediglich in den zweiten, stärker in axialer Richtung ausgerichteten Erstreckungsabschnitten und die Ausbildung der zweidimensionalen Struktur in den ersten, stärker in Umfangsrichtung ausgerichteten Erstreckungsabschnitten hohe wirksame Griffkanten für guten Griff auf Schnee zur Erzielung guter Traktions-, Brems- und Handlingeigenschaften unter Nutzung der versteifenden Wirkung in Umfangsrichtung bei Erzielung guten Trockeneigenschaften und unter besonders wirksamem Schneegriff in Querrichtung für verbessertes Handling-Verhalten auf Schnee einfach umgesetzt werden.

Die Ausbildung der zweiten Erstreckungsabschnitte mit dem ersten und dem zweiten radialen Erstreckungsabschnitten mit ihrem Schnittkonturverlauf ermöglichen darüber hinaus eine gezielte Einstellung des Öffnungswinkels des Feineinschnittes und somit noch bessere Schneegriffwirkung. Die Ausbildung ermöglicht somit auch bei Nutzung von besonders langen Feineinschnitten im Profil die Umsetzung guter Schneegriffeigenschaften für Traktion, Handling und Bremsen bei gleichzeitig guten Trockeneigenschaften. Besonders vorteilhaft ist die Ausbildung eines Fahrzeugreifens gemäß den Merkmalen von Anspruch 2, wobei die Schnittkontur des Feineinschnitts im zweiten radialen Erstreckungsabschnitt wellen- oder zickzackförmig ausgebildet ist. Hierdurch kann eine gezielte Verformung unter Krafteinwirkung durch Steifigkeitsanpassung in einfacher Weise umgesetzt werden.

Besonders vorteilhaft ist die Ausbildung eines Fahrzeugreifens gemäß den Merkmalen von Anspruch 3, wobei die Schnittkontur des Feineinschnitts im zweiten radialen Erstreckungsabschnitt einen halbkreislinienförmigen Verlauf bildet. Dies ermöglicht bei einfacher Fertigbarkeit die Umsetzung eines besonders harmonischen Steifigkeitsverlaufs des Feineinschnitts.

Besonders vorteilhaft ist die Ausbildung eines Fahrzeugreifens gemäß den Merkmalen von Anspruch 4, wobei im zweiten Erstreckungsabschnitt des Feineinschnitts jeweils ausgehend von der radial äußeren Oberfläche nach innen hin jeweils zunächst ein erster radialer Erstreckungsabschnitt der in radialer Richtung R gemessenen Erstreckungshöhe hₐ ausgebildet ist, an den sich in radialer Richtung R nach innen hin ein zweiter radialer Erstreckungsabschnitt der Erstreckungshöhe hₘ anschließt. Hierdurch kann in einfacher Weise gezielt das Einsetzen der Versteifungswirkung ab einer durch hₐ bestimmten Tiefe des Feineinschnitts entsprechend den individuellen Erfordernissen eingestellt werden. Besonders vorteilhaft ist die Ausbildung eines Fahrzeugreifens gemäß den Merkmalen von Anspruch 5, wobei radial innerhalb der Position des zweiten radialen Erstreckungsabschnitts ein **dritter** radialer Erstreckungsabschnitt angeordnet ist, der sich in radialer Richtung R nach außen bis zu diesem zweiten radialen Erstreckungsabschnitt - und insbesondere in radialer Richtung R nach innen hin bis in die Tiefe T₁ des Feineinschnittes - erstreckt. Hierdurch kann in einfacher Weise eine weitere Versteifungswirkung in dem radial inneren Erstreckungsabschnitt des Feineinschnitts nahe des Feineinschnittgrundes, der ohnehin etwas steifer ist, vermieden werden und der Steifigkeitsverlauf somit noch gezielter den individuellen Erfordernissen entsprechend eingestellt werden.

Besonders vorteilhaft ist die Ausbildung eines Fahrzeugreifens gemäß den Merkmalen von Anspruch 6, wobei der Feineinschnitt mit einer in radialer Richtung R gemessenen maximalen Tiefe T_{Max} mit (1,5 T₁) ≥ T_{Max} > T₁ ausgebildet ist, und wobei der Feineinschnittsgrund in der Tiefe T_{Max} längs der ersten und zweiten Erstreckungsabschnitte des Feineinschnitts im Wesentlichen geradlinig erstreckt -insbesondere in die erste Haupterstreckungsrichtung ausgerichtet - ist.

Besonders vorteilhaft zur Erzielung optimaler Schneeseitenführung ist die Ausbildung eines Fahrzeugreifens gemäß den Merkmalen von Anspruch 7, wobei die ersten Erstreckungsabschnitte des Feineinschnitts mit ihrer Erstreckung in der radial äußeren Oberfläche jeweils einen Winkel α zur Umfangsrichtung U einschließen mit 0°≤α<45°.

Besonders vorteilhaft optimaler Schneeseitenführung ist die Ausbildung eines Fahrzeugreifens gemäß den Merkmalen von Anspruch 8, wobei die zweiten Erstreckungsabschnitte des Feineinschnitts mit ihrer Erstreckung in der radial äußeren Oberfläche jeweils einen Winkel β zur Umfangsrichtung U einschließen mit 45°<β≤90°.

Besonders vorteilhaft optimaler Schneeseitenführung ist die Ausbildung eines Fahrzeugreifens gemäß den Merkmalen von Anspruch 9, wobei ein erster Erstreckungsabschnitt und ein anschließender zweiter Erstreckungsabschnitt des Feineinschnitts in der radial äußeren Oberfläche jeweils einen Winkel γ einschließen mit 45°≤γ≤135°.

Besonders vorteilhaft ist die Ausbildung eines Fahrzeugreifens gemäß den Merkmalen von Anspruch 10, wobei die zweite Haupterstreckungsrichtung die radiale Richtung R ist. Hierdurch kann der Schneegrifft weiter verbessert werden.

Besonders vorteilhaft ist die Ausbildung eines Fahrzeugreifens gemäß den Merkmalen von Anspruch 11, wobei der Feineinschnitt mit einem - insbesondere mit beiden - längs ihrer ersten Haupterstreckungsrichtung gebildeten Erstreckungsende(n) in eine das Profilelement begrenzende Rille - insbesondere in eine Umfangsrille -mündet.

Die Erfindung wird im Folgenden an Hand der in den Figuren 1 bis 5 dargestellten Ausführungsbeispiele näher erläutert. Hierin zeigen
- Fig.1: einen Umfangsabschnitt eines Laufstreifenprofils des Fahrzeugluftreifens eines Personenkraftwagens (Pkw) in Draufsicht,
- Fig.2: ein Profilblockelement des Laufstreifenprofils von Fig.1 in einer vergrößerten Darstellung in Draufsicht,
- Fig.3: einen Feineinschnitt des Profilblockelements von Fig.2 in Schnittdarstellung gemäß Schnitt III-III von Fig.2 mit Blick auf eine Feineinschnittswand des Feineinschnitts,
- Fig.4: das Profilblockelementes von Fig.2 in Schnittdarstellung gemäß Schnitt IV-IV von Fig.3 und
- Fig.5: das Profilblockelement von Fig.2 in Schnittdarstellung gemäß Schnitt V-V von Fig.3.

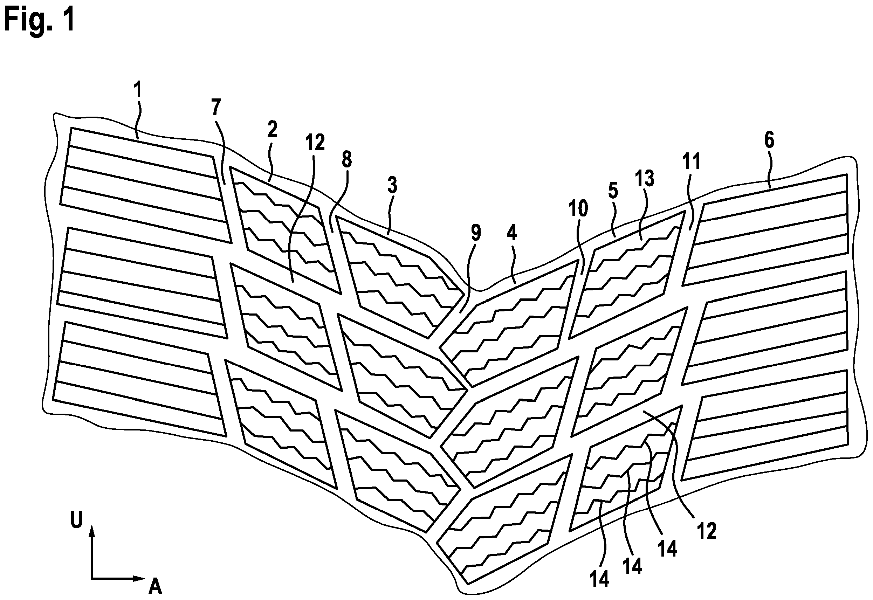

Figur 1 zeigt das Laufstreifenprofil eines Fahrzeugluftreifens eines Personenkraftwagens (Pkw) mit Winterreifenprofil bekannter Art.

Das Laufstreifenprofil ist in bekannter Weise aus in axialer Richtung A nebeneinander angeordneten und über den gesamten Umfang des Fahrzeugluftreifens erstreckten Profilblockreihen 1, 2, 3, 4, 5 und 6 ausgebildet. Die Profilblockreihen 1 bis 6 erstrecken sich dabei über den gesamten Umfang des Fahrzeugluftreifens. Die Profilblockreihe 1 ist in Fig.1 auf der linken Seite dargestellten einen Reifenschulter des Reifens ausgebildet und bildet eine Schulterprofilblockreihe. Die Profilblockreihe 6 ist auf der in Fig.1 der rechten Seite dargestellten anderen Reifenschulter ausgebildet und bildet ebenfalls eine Schulterprofilblockreihe.

Die Profilblockreihen 2 bis 5 sind zwischen den beiden Profilblockreihen 1 und 6 ausgebildet und bilden zentrale Profilblockreihen. Die Profilblockreihe 1 und die Profilblockreihe 2 sind in bekannter Weise durch eine über den gesamten Umfang des Fahrzeugluftreifens erstreckte Umfangsrille 7 in axialer Richtung A voneinander getrennt. Die Profilblockreihen 2 und 3 sind in bekannter Weise durch eine über den gesamten Umfang des Fahrzeugluftreifens erstreckte Umfangsrille 8 in axialer Richtung A voneinander getrennt. Die Profilblockreihen 3 und 4 sind durch eine über den gesamten Umfang des Fahrzeugluftreifens erstreckte Umfangsrille 9 in axialer Richtung A voneinander getrennt. Die Profilblockreihen 4 und 5 sind durch eine über den gesamten Umfang des Fahrzeugluftreifens erstreckte Umfangsrille 10 in axialer Richtung A voneinander getrennt. Die Profilblockreihen 5 und 6 sind durch eine über den gesamten Umfang des Fahrzeugluftreifens erstreckte Umfangsrille 11 in axialer Richtung A voneinander getrennt. Die Profilblockreihen 1 bis 6 sind jeweils aus in Umfangsrichtung U des Fahrzeugluftreifens hintereinander angeordneten und jeweils durch Querrillen voneinander getrennten Profilblockelementen bekannter Art ausgebildet und sind in radialer Richtung R nach außen hin durch eine innerhalb des axialen Erstreckungsbereich der Bodenaufstandsbreite des Fahrzeugluftreifens die Straßenkontaktoberfläche bildende, radial äußere Oberfläche 17 begrenzt.

So ist beispielsweise die Profilblockreihe 5 aus in Umfangsrichtung U des Fahrzeugluftreifens hintereinander angeordneten und durch Querrillen 12 in Umfangsrichtung U voneinander beabstandeten Profilblockelementen 13 ausgebildet. Dabei münden die jeweils zwei in Umfangsrichtung U hintereinander angeordnete Profilblockelemente 13 voneinander trennenden Querrillen 12 in axialer Richtung A des Fahrzeugluftreifens in die die Profilblockelemente 13 der Profilblockreihe 5 axial begrenzenden Umfangsrillen 10 und 11. Dies ist in Fig.1 zu erkennen.

Wie in Figur 1 zu erkennen ist, sind in den Profilblockelementen der Profilblockreihen 1, 2, 3, 4, 5, 6 jeweils Feineinschnitte ausgebildet, welche sich in axialer Richtung A durch die gesamten Profilblockelemente hinweg erstrecken.

Die Feineinschnitte eines Profilblockelementes sind dabei in der radial äußeren Oberfläche 17 mit ihrer Haupterstreckungsrichtung im Wesentlichen in axialer Richtung A ausgerichtet. Die Feineinschnitte eines Profilblockelementes sind dabei jeweils mit ihrer Haupterstreckungsrichtung parallel zueinander und zu den das Profilblockelement in Umfangsrichtung begrenzenden Querrillen ausgerichtet.

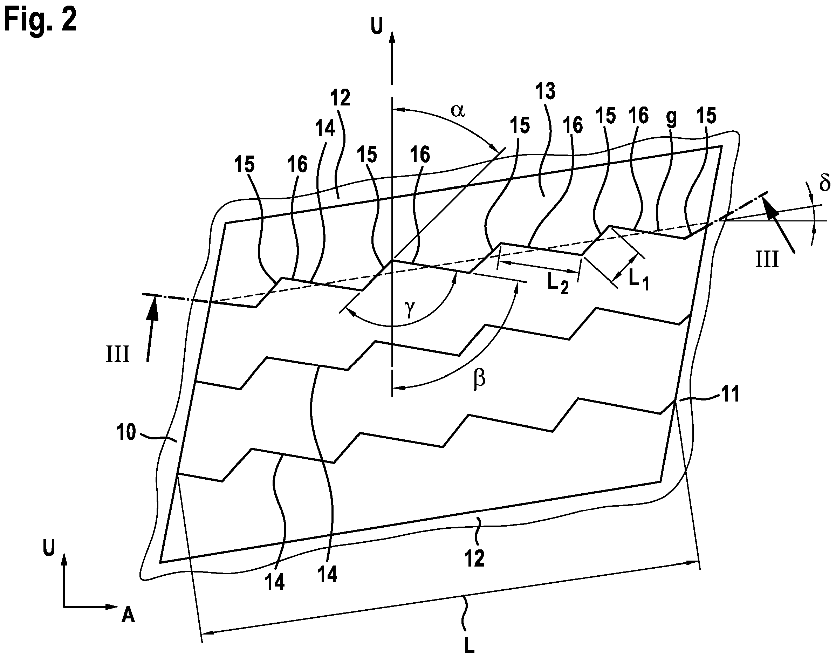

Die in den Profilblockelemente 13 der Profilblockreihe 5 ausgebildeten Feineinschnitte 16 sind dabei jeweils - wie in den Figuren 1 und 2 dargestellt ist - in der radial äußerer Oberfläche 17 des Profilblockelement 13 ausgehend von ihrem zur Umfangsrille 10 hinweisenden Erstreckungsende bis zu ihrem zur Umfangsrille 11 hinweisenden Erstreckungsende mit ihrer Haupterstreckungsrichtung längs einer Geraden g ausgerichtet, welche unter Einschluss eines Neigungswinkels δ mit 0° ≤ δ ≤ 35° zur axialen Richtung A ausgerichtet ist, beispielsweise mit δ = 25°.

Das Profilblockelement 13 wird zur Umfangsrille 10 hin durch eine Profilblockelementflanke begrenzt, welche die zum Profilblockelemente 13 hinweisende Rillenwand der Umfangsrille 10 bildet. Analog wird das Profilblockelement 13 zur Umfangsrille 11 hin durch eine Profilblockelementflanke begrenzt, welche die zum Profilblockelemente 13 hinweisende Rillenwand der Umfangsrille 11 bildet.

Wie in Fig.2 zu erkennen ist, ist im dargestellten Ausführungsbeispiel das eine, der Umfangsrille 10 zugewandte Erstreckungsende des Feineinschnittes 16 in der zum Profilblockelement 13 hinweisenden Rillenwand der Umfangsrille 10 und das andere, der Umfangsrille 11 zugewandte Erstreckungsende des Feineinschnittes 16 in der zum Profilblockelement 13 hinweisenden Rillenwand der Umfangsrille 11 ausgebildet. Im dargestellten Ausführungsbeispiel erstreckt sich der Feineinschnitt 14 somit von Umfangsrille 10 bis zur Umfangsrille 11 durch das Profilblockelement 13 hindurch und mündet zur einen Seite in die Umfangsrille 10 und zur anderen Seite in die Umfangsrille 11.

Wie in Figur 2 dargestellt ist, ist der Feineinschnitt 14 längs seiner Erstreckung in seiner Haupterstreckungsrichtung entlang der Geraden g mit alternierend unmittelbar hintereinander angeordneten zweiten Erstreckungsabschnitten 16 und ersten Erstreckungsabschnitten 15 ausgebildet. Die ersten Erstreckungsabschnitte 15 sind in der radial äußeren Oberfläche 17 jeweils im Wesentlichen geradlinig erstreckt mit einer Erstreckungslänge L₁ ausgebildet und unter Einschluss eines Neigungswinkel α mit 0° ≤ α < 45° zur Umfangsrichtung U ausgerichtet. Im dargestellten Ausführungsbeispiel ist α = 20° gewählt. Die Umfangsrichtungskomponente der Erstreckungsrichtung des Feineinschnitts 16 im ersten Erstreckungsabschnitt 15 ist somit größer als die in axialer Richtung A ausgebildete Richtungskomponente. Die zweiten Erstreckungsabschnitte 16 sind in der radial äußeren Oberfläche 17 jeweils ebenfalls im Wesentlichen geradlinig erstreckt mit einer Erstreckungslänge L₂ ausgebildet und unter Einschluss eines Neigungswinkel β mit 45° < β ≤ 90° zur Umfangsrichtung U ausgerichtet. Im dargestellten Ausführungsbeispiel ist β = 80° gewählt. Die Umfangsrichtungskomponente der Erstreckungsrichtung des Feineinschnitts 14 im zweiten Erstreckungsabschnitt 16 ist somit kleiner als die in axialer Richtung A ausgebildete Richtungskomponente.

Dabei ist die Erstreckungsrichtung des Feineinschnitt 14 längs der durch die Geraden g dargestellten Haupterstreckungsrichtung ausgehend von der Umfangsrille 10 in Richtung zur Umfangsrille 11 hin gesehen im ersten Erstreckungsabschnitt 15 jeweils mit einer in Darstellung von Fig.2 nach oben hin gerichteten Orientierung ihrer Umfangsrichtungskomponente und im zweiten Erstreckungsabschnitt 16 mit einer nach unten hin gerichteten Orientierung der Umfangsrichtungskomponente ausgebildet. Die Neigung der Erstreckungsrichtung ist somit im zweiten Erstreckungsabschnitt 16 entgegengesetzt zum ersten Erstreckungsabschnitt 15 gewählt.

Die ersten Erstreckungsabschnitte 15 und die zweiten Erstreckungsabschnitte 16 bilden somit eine zickzack-förmige Ausbildung des Feineinschnitts 14 in der radial äußeren Oberfläche 17. Die Erstreckungslänge L₂ ist dabei mit L₂ > L₁ ausgebildet.

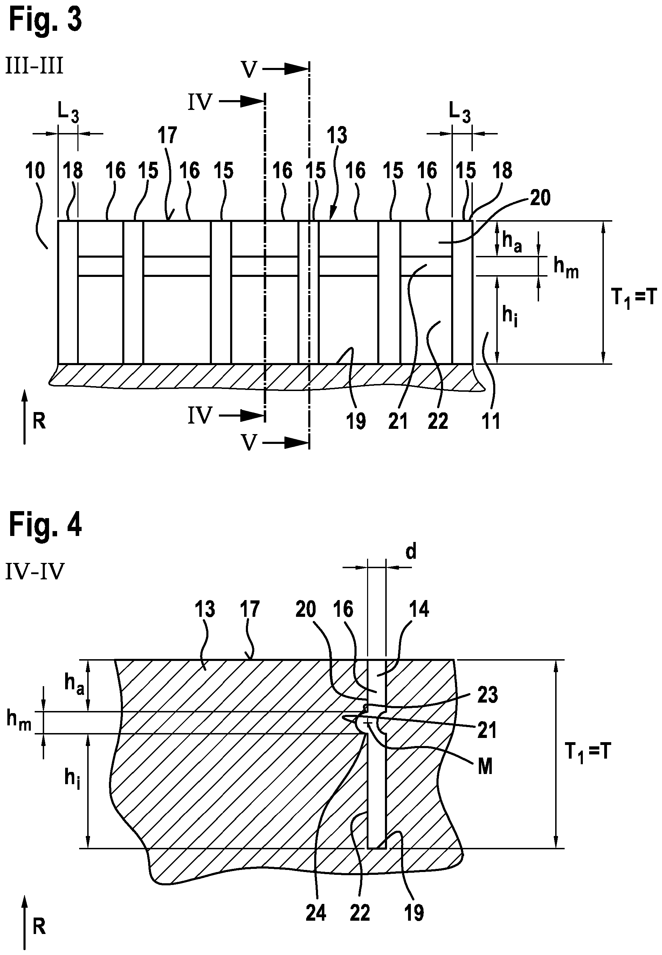

Der Feineinschnitt 14 ist, wie in den Figuren 3 bis 5 zu erkennen ist, längs seiner Erstreckung von Umfangsrille 10 bis zur Umfangsrille 11 jeweils mit einer Tiefe T ausgebildet, welche in radialer Richtung R ausgehend von der radial äußeren Oberfläche 17 bis zu dem den Feineinschnitt 14 nach radial innen hin begrenzenden Feineinschnittsgrund 19 gemessen wird.

Der Feineinschnitt 14 ist beiderseits des Feineinschnittsgrunds 19 von einer Feineinschnittswand begrenzt, welche sich ausgehend vom Feineinschnittsgrund 19 bis zur radial äußeren Oberfläche 17 erstreckt. Die beiden den Feineinschnitt 14 begrenzenden Feineinschnittswände sind parallel und im Abstand d zueinander mit korrespondierend ausgebildeter Oberfläche ausgebildet. Der Abstand d bildet die Feineinschnittsbreite d des Feineinschnittes 14 mit 0,4 mm ≤ d ≤ 1 mm, beispielsweise mit d = 0,8 mm.

Wie in den Figuren 2 bis 5 dargestellt ist, bilden die beiden parallelen Feineinschnittswände des Feineinschnitts 14 somit jeweils den in senkrecht zum Feinschnitt 14 in der radial äußeren Oberfläche 17 gebildeten Schnittebenen längs der radialen Erstreckung des Feineinschnitts 14 ausgebildeten Schnittkonturverlauf des Feineinschnittes 14. Wie in den Figuren 3 bis 5 zu erkennen ist, ist der Feineinschnitt 14 dabei in den jeweiligen senkrecht zur Erstreckung des Feineinschnittes 14 in der radial äußeren Oberfläche 17 gebildeten Schnittebenen gesehen mit einem in radialer Richtung R nach innen hin erstreckten radialen Erstreckungsverlauf ausgebildet.

Dabei ist in den Figuren 2 bis 5 zu erkennen, dass der Schnittkonturverlauf des Feineinschnitts 14 in den zweiten Erstreckungsabschnitten 16 jeweils in den senkrecht zum Feineinschnitt 14 in der radial äußeren Oberfläche 17 gebildeten Schnittebenen mit einem ersten radialen, äußeren Erstreckungsabschnitt 20, welcher sich ausgehend von der radial äußeren Oberfläche 17 in radialer Richtung R nach innen hin geradlinig über eine Erstreckungshöhe hₐ erstreckt, aus einem in radialer Richtung R nach innen hin sich unmittelbar an den ersten radialen Erstreckungsabschnitt 20 anschließenden zweiten radialen Erstreckungsabschnitt 21 der in radialer Richtung R gemessenen Erstreckungshöhe hₘ und aus einem unmittelbar an den zweiten radialen Erstreckungsabschnitt 21 in radialer Richtung R nach innen hin anschließend ausgebildeten dritten radialen Erstreckungsabschnitt 22 der Erstreckungshöhe hᵢ, welcher ebenfalls im Wesentlichen geradlinig in radialer Richtung R erstreckt ist, ausgebildet ist. Der dritte radiale Erstreckungsabschnitt 22 endet mit seiner radialen Erstreckung in einer radialen Position in einer von der radial äußeren Oberfläche 17 nach radial innen hin gemessenen Tiefe T₁ mit T₁=(hᵢ + hₐ + hₘ ). Im dargestellten Ausführungsbeispiel ist T₁ = T gewählt und entspricht auch der maximalen Tiefe Tₘₐₓ des Feineinschnitts 14.

Wie in Figur 4 zu erkennen ist, ist die Schnittkontur des Feineinschnitts 14 und somit der beiden Feineinschnittswände in den zweiten Erstreckungsabschnitten 16 im zweiten radialen Erstreckungsabschnitt 21 mit einem radial äußeren Erstreckungsbereich 23 und mit einem radial inneren Erstreckungsbereich 24 ausgebildet. Im radial äußeren Erstreckungsbereich 23 und im radial inneren Erstreckungsbereich 24 ist die Schnittkontur zusätzlich zu ihrer radialen Richtungskomponente mit einer in der Schnittkonturebene senkrecht zur radialen Richtung R ausbildeten Richtungskomponente ihrer Erstreckung ausgebildet. Dabei ist die senkrecht zur radialen Richtung R ausgebildete Richtungskomponente im radial äußeren Erstreckungsbereich 23 entgegengesetzt orientiert zu der im radial inneren Erstreckungsbereich 24.

Die Schnittkontur der Erstreckungsbereiche 23 und 24 bilden im dargestellten Ausführungsbeispiel jeweils einen Kreislinienabschnitt. Die Schnittkontur der in radialer Richtung R hintereinander angeordneten Erstreckungsbereiche 23, 24 des Feineinschnitts bildet in ihrer Gesamtheit dabei die Bogenlinie eines Halbkreises um einen Mittelpunkt M, der auf der Verbindungsstrecke des radial äußeren Erstreckungsabschnitts 20 und der radial inneren Erstreckungsabschnitts 22 liegt. Wie in Figur 4 zu erkennen ist, bildet die Feineinschnittskontur somit in der einen Feineinschnittswand im zweiten, d.h. im mittleren radialen Erstreckungsabschnitt 21 eine halbkreisförmige Eindellung der Feineinschnittswand und in der korrespondierend ausgebildeten anderen Feineinschnittswand eine entsprechend halbkreisförmige Auswölbung.

Produktionsbedingt ist der Übergang zwischen dem radial äußeren Erstreckungsbereich 23 und dem ersten radialen Erstreckungsabschnitt 20 sowie der Übergang zwischen dem radial inneren Erstreckungsbereich 24 und dem dritten radialen Erstreckungsabschnitt 21 jeweils abgerundet ausgebildet.

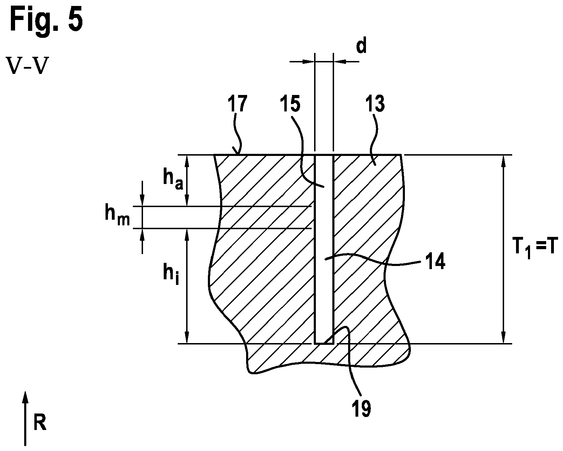

Wie in den Figuren 3 und 5 dargestellt ist, ist in den längs der Erstreckung des Feineinschnitts 14 im ersten Erstreckungsabschnitt 15 senkrecht zum Feinschnitt 14 in der radial äußeren Oberfläche 17 gebildeten Schnittebenen der Feineinschnitt 14 ausgehend von der radial äußeren Oberfläche 17 bis in die radiale Erstreckungstiefe T₁ hin mit einer im Wesentlichen geradlinigen, in radialer Richtung R erstreckten Schnittkontur ausgebildet.

In einem in Fig.2 dargestellten Ausführungsbeispiel mündet der Feineinschnitt 14 dabei mit einem zweiten Erstreckungsabschnitt 16 in die Umfangsrille 10 und mit einem ersten Erstreckungsabschnitt 15 in die Umfangsrille 11.

In einem anderen, in Figur 3 dargestellten Ausführungsbeispiel ist der Feineinschnitt 14 jeweils in einem schmalen Randabschnitt 18 im Übergang zur angrenzenden Umfangsrille 10 bzw. 11 hin längs seiner radialen Erstreckung ausgehend von der radial äußeren Oberfläche 17 bis zur Erstreckungstiefe T₁ - wie am Beispiel der zweiten Erstreckungsabschnitte 15 beschrieben - im Wesentlichen mit geradlinig erstreckter, in radialer Richtung R ausgerichteter Schnittkontur ausgebildet. Im Ausführungsbeispiel von Figur 3 ist zu erkennen, dass der zur Umfangsrille 11 hin ausgebildete Erstreckungsabschnitt 15 dabei unverändert ausgebildet ist und im Übergang zur Umfangsrille 11 den Randabschnitt 18 bildet. Der zur Umfangsrichtung 10 hin den Feineinschnitt 14 begrenzende äußere erste Erstreckungsabschnitt 16 ist in seiner Ausrichtung in der radial äußeren Oberfläche unverändert bis zur Umfangsrille 10 ausgebildet, ist jedoch in dem schmalen Übergang zur Umfangsrille 10 als Randabschnitt 18 ohne den mittleren Erstreckungsabschnitt 21, sondern lediglich mit einer in radialer Richtung R im Wesentlichen geradlinigen Erstreckung seiner Schnittkontur ausgebildet.

Der Randabschnitt 18 ist mit einer Erstreckungslänge L₃ ausgebildet.

Wie in den Figuren dargestellt und oben beschrieben, erstreckt sich in diesen Ausführungsbeispielen der Feineinschnitt 14 mit seiner Erstreckungstiefe T₁ = T.

In einem anderen - nicht dargestellten - Ausführungsbeispiel ist T₁ < T gewählt mit T₁ ≤ T ≤ (1,5) T₁. Bei diesem nicht dargestellten Ausführungsbeispiel ist in der Position radial innerhalb der Tiefe T₁ der Feineinschnittsgrund 19 in der Tiefe T ausgebildet und erstreckt sich längs der Erstreckungsrichtung der Geraden g im Wesentlichen geradlinig. In dem radialen Erstreckungsabschnitt zwischen der radialen Position in der Tiefe T₁ und der Tiefe T verändert sich in jeder parallel zur radial äußeren Oberfläche gebildeten Ebene längs der radialen Erstreckung bis zum Feineinschnittsgrund 19 hin die Zickzackform der durch die ersten Erstreckungsabschnitte 16 und die zweiten Erstreckungsabschnitte 15 gebildeten Zickzackform derart, dass durch die Zacken der Zickzackform bestimmten Amplituden bis zum Feineinschnittsgrund 19 in der Tiefe T hin kontinuierlich abnehmen und dort einen Wert 0 annehmen.

Die Tiefe T₁ ist in den oben beschriebenen und dargestellten Ausführungen mit 6mm ≤ T₁ ≤ 9mm ausgewählt. Die Höhen hₐ, hₘ und hᵢ sind mit 0,5mm ≤ hₐ ≤ 5mm, 1mm ≤ hₘ ≤ 4mm und 1mm ≤ hᵢ ≤ 5mm ausgebildet.

Die Erstreckungslänge L ist mit 10mm ≤ L ≤ 100mm ausgebildet.

Die Erstreckungslänge L₁ ist mit 2 mm ≤ L₁ ≤ 6 mm ausgebildet. Die Erstreckungslänge L₂ ist mit 2 mm ≤ L₂ ≤ 6 mm ausgebildet. In dem oben dargestellten Ausführungsbeispielen ist - wie beschrieben - L₂ > L₁ ausgebildet. Die Erstreckungslänge L₂ ist in anderer Ausführung mit L₂ = L₁ ausgebildet.

Erstreckungslänge L₃ ist mit 0mm≤L₃≤L₂ ausgebildet. Beispielsweise ist L₂ =2mm groß ausgebildet. In einem Ausführungsbeispiel ist L₃=L₂ ausgebildet.

Der erste Erstreckungsabschnitt 15 und der zweite, an diesen angrenzende Erstreckungsabschnitt 16 schließen in der radial äußeren Oberfläche 17 jeweils einen Winkel γ mit 45° ≤ γ ≤ 135°, beispielsweise mit γ = 100° ein.

In den Figuren 2 bis 5 wurden die Feineinschnitte 14 der Profilblockelemente 13 dargestellt und oben beschrieben.

Die Feineinschnitte der Profilblockelemente der Profilblockreihen 4, 3 und 2 sind in analoger Weise zu den Feineinschnitten 14 der Profilblockelemente 13 ausgebildet.

In einer anderen Ausführung sind nur die Feineinschnitte der Profilblockelemente von zwei oder drei der Profilblockreihen 2, 3, 4 und 5 in der beschriebenen Weise der Feineinschnitte 14 ausgebildet und die Feineinschnitte der Profilblockelemente der anderen, zentralen Profilblockreihen sind in herkömmlicher Weise mit längs aller ihrer Erstreckungsabschnitten jeweils mit einer in radialer Richtung R im Wesentlichen geradlinigen, radial erstreckten Schnittkontur ausgebildet und in einer weiteren Alternative mit längs aller ihrer Erstreckungsabschnitten mit auch längs der radialen Erstreckung ausgebildeten zickzack- oder wellenförmig verlaufender Schnittkontur ausgebildet.

### Bezugszeichenliste

- 1: Profilblockreihe
- 2: Profilblockreihe
- 3: Profilblockreihe
- 4: Profilblockreihe
- 5: Profilblockreihe
- 6: Profilblockreihe
- 7: Umfangsrille
- 8: Umfangsrille
- 9: Umfangsrille
- 10: Umfangsrille
- 11: Umfangsrille
- 12: Querrille
- 13: Profilblockelement
- 14: Feineinschnitt
- 15: Erster Erstreckungsabschnitt
- 16: Zweiter Erstreckungsabschnitt
- 17: Radial äußere Oberfläche
- 18: Randabschnitt
- 19: Feineinschnittsgrund
- 20: radialer Erstreckungsabschnitt
- 21: radialer Erstreckungsabschnitt
- 22: radialer Erstreckungsabschnitt
- 23: Erstreckungsbereich
- 24: Erstreckungsbereich

## Patentansprüche

1. Laufstreifenprofil eines Fahrzeugreifens - insbesondere eines PKW-Fahrzeugreifens - mit durch Rillen (10,11,12) voneinander getrennten Profilelementen (13), die nach radial außen von einer radial äußeren Oberfläche (17) begrenzt werden, und mit in Profilelementen (13) ausgebildeten Feineinschnitten (14), die längs einer in der radial äußeren Oberfläche (17) erstreckten ersten Haupterstreckungsrichtung und längs einer ausgehend von der radial äußeren Oberfläche (17) nach radial innen erstreckten zweiten Haupterstreckungsrichtung erstreckt ausgebildet sind und jeweils in radialer Richtung R nach innen hin von einem Feineinschnittgrund (19) begrenzt werden, wobei der Feineinschnitt (14) ausgehend von der radial äußeren Oberfläche (17) bis in eine Tiefe T₁ jeweils längs seiner Erstreckung längs der ersten Haupterstreckungsrichtung zumindest in einem Erstreckungsbereich aus in alternierender Abfolge hintereinander angeordneten ersten Erstreckungsabschnitten (15) und zweiten Erstreckungsabschnitten (16) ausgebildet ist,
wobei der Feineinschnitt (14) in den senkrecht zu seiner Erstreckung in der radial äußeren Oberfläche (17) gebildeten Schnittebenen mit einer Schnittkontur ausgebildet ist, die im ersten Erstreckungsabschnitt (15) jeweils ausgehend von der radial äußeren Oberfläche (17) bis zur Tiefe T1 hin im Wesentlichen geradlinig ist, **wobei die Feineinschnitte (14) längs der ersten Haupterstreckungsrichtung mit größter axialer Richtungskomponente ausgebildet sind,**
**wobei der Feineinschnitt (14) in seinen ersten Erstreckungsabschnitten (15) längs seiner Erstreckung längs der ersten Haupterstreckungsrichtung mit einer größten Richtungskomponente seiner Erstreckung in Umfangsrichtung U ausgerichtet ist, und in seinen zweiten Erstreckungsabschnitten (16) längs seiner Erstreckung längs der ersten Haupterstreckungsrichtung mit einer größten Richtungskomponente seiner Erstreckung in axialer Richtung A ausgerichtet ist,** und
**wobei der Feineinschnitt (14) in den senkrecht zu seiner Erstreckung in der** radial äußeren Oberfläche (17) gebildeten Schnittebenen mit einer Schnittkontur ausgebildet ist, die im zweiten Erstreckungsabschnitt (16) mit wenigstens einem ersten radialen Erstreckungsabschnitt (20), in dem die Schnittkontur im Wesentlichen geradlinig in der zweiten Haupterstreckungsrichtung ausgerichtet ist, ausgebildet ist,
**dadurch gekennzeichnet,**
**dass** die Schnittkontur jedes der zweiten Erstreckungsabschnitte (16) der Feineinschnitte (4) in sämtlichen senkrecht zu seiner Erstreckung in der radial äußeren Oberfläche gebildeten Schnittebenen mit wenigstens einem zweiten radialen Erstreckungsabschnitt (22) ausgebildet ist, in dem die Schnittkontur eine in die zweite Haupterstreckungsrichtung ausgerichtete Richtungskomponente und eine senkrecht hierzu ausgerichtete Richtungskomponente aufweist, die längs der Erstreckung der Schnittkontur **längs der zweiten Haupterstreckungsrichtung mit wechselnder Orientierung ausgebildet ist.**

2. Laufstreifenprofil gemäß den Merkmalen von Anspruch 1,
wobei die Schnittkontur des Feineinschnitts (14) im zweiten radialen Erstreckungsabschnitt (22) wellen- oder zickzackförmig ausgebildet ist.

3. Laufstreifenprofil gemäß den Merkmalen von Anspruch 1,
wobei die Schnittkontur des Feineinschnitts (14) im zweiten radialen Erstreckungsabschnitt (22) einen halbkreislinienförmigen Verlauf bildet.

4. Laufstreifenprofil gemäß den Merkmalen von einem der vorangegangenen Ansprüche,
wobei im zweiten Erstreckungsabschnitt (16) des Feineinschnitts (14) jeweils ausgehend von der radial äußeren Oberfläche (17) nach innen hin jeweils zunächst ein erster radialer Erstreckungsabschnitt (**20**) der in radialer Richtung R gemessenen Erstreckungshöhe hₐ ausgebildet ist, an den sich in radialer Richtung R nach innen hin ein zweiter radialer Erstreckungsabschnitt (**21**) der Erstreckungshöhe hₘ anschließt.

5. Laufstreifenprofil gemäß den Merkmalen von Anspruch 1,
wobei radial innerhalb der Position des zweiten radialen Erstreckungsabschnitts (**21**) ein **dritter** radialer Erstreckungsabschnitt (**22**) angeordnet ist, der sich in radialer Richtung R nach außen bis zu diesem zweiten radialen Erstreckungsabschnitt (**21**) - und insbesondere in radialer Richtung R nach innen hin bis in die Tiefe T₁ des Feineinschnittes (14) - erstreckt.

6. Laufstreifenprofil gemäß den Merkmalen von einem der vorangegangenen Ansprüche,
wobei der Feineinschnitt (14) mit einer in radialer Richtung R gemessenen maximalen Tiefe T_{Max} mit (1,5 T₁) ≥ T_{Max} > T₁ ausgebildet ist, und
wobei der Feineinschnittsgrund (19) in der Tiefe T_{Max} längs der ersten (15) und zweiten (16) Erstreckungsabschnitte des Feineinschnitts (14) im Wesentlichen geradlinig erstreckt - insbesondere in die erste Haupterstreckungsrichtung g ausgerichtet - ist.

7. Laufstreifenprofil gemäß den Merkmalen von einem der vorangegangenen Ansprüche,
wobei die ersten Erstreckungsabschnitte (15) des Feineinschnitts (14) mit ihrer Erstreckung in der radial äußeren Oberfläche (17) jeweils einen Winkel α zur Umfangsrichtung U einschließen mit 0°≤α<45°.

8. Laufstreifenprofil gemäß den Merkmalen von einem der vorangegangenen Ansprüche,
wobei die zweiten Erstreckungsabschnitte (16) des Feineinschnitts (14) mit ihrer Erstreckung in der radial äußeren Oberfläche (17) jeweils einen Winkel β zur Umfangsrichtung U einschließen mit 45°<β≤90°.

9. Laufstreifenprofil gemäß den Merkmalen von einem der vorangegangenen Ansprüche,
wobei ein erster Erstreckungsabschnitt (15) und ein anschließender zweiter Erstreckungsabschnitt (16) des Feineinschnitts (14) in der radial äußeren Oberfläche (17) jeweils einen Winkel γ einschließen mit 45°≤γ≤135°.

10. Laufstreifenprofil gemäß den Merkmalen von einem der vorangegangenen Ansprüche,
wobei die zweite Haupterstreckungsrichtung die radiale Richtung R ist.

11. Laufstreifenprofil gemäß den Merkmalen von einem der vorangegangenen Ansprüche,
wobei der Feineinschnitt (14) mit einem - insbesondere mit beiden - längs ihrer ersten Haupterstreckungsrichtung g gebildeten Erstreckungsende(n) in eine das Profilelement (13) begrenzende Rille (10,11) - insbesondere in eine Umfangsrille - mündet.

## Claims

1. Tread profile of a vehicle tyre, in particular of a passenger car tyre, with profile elements (13) which are separated from one another by way of grooves (10, 11, 12) and are delimited radially to the outside by a radially outer surface (17), and with sipes (14) which are configured in profile elements (13) and are configured to extend along a first main direction of extent which extends in the radially outer surface (17), and along a second main direction of extent which extends radially inwards starting from the radially outer surface (17), and are delimited in each case in the radial direction R towards the inside by a sipe base (19), the sipe (14) being configured, starting from the radially outer surface (17) as far as a depth T₁, in each case along its extent along the first main direction of extent at least in an extent region consisting of first extent sections (15) and second extent sections (16) which are arranged behind one another in an alternating sequence, the sipe (14) being configured with a sectional contour in the sectional planes which are formed perpendicularly with respect to its extent in the radially outer surface (17), which sectional contour is substantially rectilinear in the first extent section (15), in each case starting from the radially outer surface (17) as far as the depth T₁, the sipes (14) being configured with a greatest axial directional component along the first main direction of extent, the sipe (14) being oriented in its first extent sections (15) along its extent along the first main direction of extent with a greatest directional component of its extent in the circumferential direction U, and being oriented in its second extent sections (16) along its extent along the first main direction of extent with a greatest directional component of its extent in the axial direction A, and the sipe (14) being configured with a sectional contour in the sectional planes which are formed perpendicularly with respect to its extent in the radially outer surface (17), which sectional contour is configured in the second extent section (16) with at least one first radial extent section (20), in which the sectional contour is oriented substantially rectilinearly in the second main direction of extent, **characterized in that** the sectional contour of each of the second extent sections (16) of the sipes (4) is configured with at least one second radial extent section (22) in all the sectional planes which are formed perpendicularly with respect to its extent in the radially outer surface, in which second radial extent section (22) the sectional contour has a directional component which is oriented in the second main direction of extent and a directional component which is oriented perpendicularly with respect thereto and is configured with an alternating orientation along the extent of the sectional contour along the second main direction of extent.

2. Tread profile according to the features of Claim 1, the sectional contour of the sipe (14) being of wave-shaped or zigzag-shaped configuration in the second radial extent section (22).

3. Tread profile according to the features of Claim 1, the sectional contour of the sipe (14) forming a semicircular line-shaped course in the second radial extent section (22).

4. Tread profile according to the features of one of the preceding claims, in each case a first radial extent section (20) of the extent height hₐ which is measured in the radial direction R first of all being configured in the second extent section (16) of the sipe (14), in each case starting from the radially outer surface (17) towards the inside, which first radial extent section (20) is adjoined in the radial direction R towards the inside by a second radial extent section (21) of the extent height hₘ.

5. Tread profile according to the features of Claim 1, a third radial extent section (22) being arranged radially within the position of the second radial extent section (21), which third radial extent section (22) extends in the radial direction R towards the outside as far as the said second radial extent section (21), and, in particular, in the radial direction R towards the inside as far as the depth T₁ of the sipe (14).

6. Tread profile according to the features of one of the preceding claims, the sipe (14) being configured with a maximum depth T_{Max} measured in the radial direction R, where (1.5 T₁) ≥ T_{Max} ≥ T₁, and the sipe base (19) extending substantially rectilinearly at the depth T_{Max} along the first (15) and second (16) extent sections of the sipe (14), in particular being oriented in the first main direction of extent g.

7. Tread profile according to the features of one of the preceding claims, the first extent sections (15) of the sipe (14) enclosing with their extent in the radially outer surface (17) in each case an angle α with respect to the circumferential direction U, where 0° ≤ α ≤ 45°.

8. Tread profile according to the features of one of the preceding claims, the second extent sections (16) of the sipe (14) enclosing with their extent in the radially outer surface (17) in each case an angle β with respect to the circumferential direction U, where 45° ≤ β ≤ 90°.

9. Tread profile according to the features of one of the preceding claims, a first extent section (15) and an adjoining second extent section (16) of the sipe (14) in the radially outer surface (17) enclosing in each case an angle y, where 45° ≤ γ ≤ 135°.

10. Tread profile according to the features of one of the preceding claims, the second main direction of extent being the radial direction R.

11. Tread profile according to the features of one of the preceding claims, the sipe (14) opening with one, in particular with both, extent end/ends formed along its first main direction of extent g into a groove (10, 11) which delimits the profile element (13), in particular into a circumferential groove.

## Revendications

1. Profil de bande de roulement d'un pneu de véhicule, notamment d'un pneu de voiture particulière, comprenant des éléments de profil (13) séparés les uns des autres par des rainures (10, 11, 12), qui sont délimités radialement vers l'extérieur par une surface radialement extérieure (17), et comprenant des entailles fines (14) réalisées dans des éléments de profil (13), qui sont réalisées le long d'une première direction d'extension principale s'étendant dans la surface radialement extérieure (17) et le long d'une deuxième direction d'extension principale s'étendant radialement vers l'intérieur à partir de la surface radialement extérieure (17) et qui sont délimitées chacune dans la direction radiale R vers l'intérieur par un fond d'entaille fine (19), l'entaille fine (14) étant réalisée, à partir de la surface radialement extérieure (17) jusqu'à une profondeur T₁, à chaque fois le long de son extension le long de la première direction d'extension principale, au moins dans une zone d'extension composée de premières sections d'extension (15) et de deuxièmes sections d'extension (16) agencées les unes après les autres en succession alternée,
la fine entaille (14) étant réalisée dans les plans de coupe formés perpendiculairement à son extension dans la surface radialement extérieure (17) avec un contour de coupe qui, dans la première section d'extension (15), est essentiellement rectiligne à partir de la surface radialement extérieure (17) jusqu'à la profondeur T1,
les entailles fines (14) étant réalisées le long de la première direction d'extension principale avec une composante directionnelle axiale majeure,
l'entaille fine (14) étant orientée dans ses premières sections d'extension (15) le long de son extension le long de la première direction d'extension principale avec une composante directionnelle majeure de son extension dans la direction circonférentielle U, et dans ses deuxièmes sections d'extension (16), le long de son extension le long de la première direction d'extension principale avec une composante directionnelle majeure de son extension dans la direction axiale A, et l'entaille fine (14) étant réalisée dans les plans de coupe formés perpendiculairement à son extension dans la surface radialement extérieure (17) avec un contour de coupe, qui est réalisé dans la deuxième section d'extension (16) avec au moins une première section d'extension radiale (20), dans laquelle le contour de coupe est orienté de manière essentiellement rectiligne dans la deuxième direction d'extension principale,
**caractérisé en ce que**
le contour de coupe de chacune des deuxièmes sections d'extension (16) des entailles fines (4) est réalisé dans tous les plans de coupe formés perpendiculairement à son extension dans la surface radialement extérieure avec au moins une deuxième section d'extension radiale (22), dans laquelle le contour de coupe présente une composante directionnelle orientée dans la deuxième direction d'extension principale et une composante directionnelle orientée perpendiculairement à celle-ci, qui est réalisée avec une orientation alternée le long de l'extension du contour de coupe le long de la deuxième direction d'extension principale.

2. Profil de bande de roulement selon les caractéristiques de la revendication 1,
le contour de coupe de l'entaille fine (14) étant réalisé sous forme ondulée ou en zigzag dans la deuxième section d'extension radiale (22).

3. Profil de bande de roulement selon les caractéristiques de la revendication 1,
le contour de coupe de l'entaille fine (14) formant un tracé en forme de ligne semi-circulaire dans la deuxième section d'extension radiale (22).

4. Profil de bande de roulement selon les caractéristiques de l'une quelconque des revendications précédentes,
dans la deuxième section d'extension (16) de l'entaille fine (14), une première section d'extension radiale (20) de la hauteur d'extension hₐ, mesurée dans la direction radiale R, étant tout d'abord réalisée à partir de la surface radialement extérieure (17) vers l'intérieur, à laquelle fait suite une deuxième section d'extension radiale (21) de la hauteur d'extension hₘ dans la direction radiale R vers l'intérieur.

5. Profil de bande de roulement selon les caractéristiques de la revendication 1, radialement à l'intérieur de la position de la deuxième section d'extension radiale (21), étant agencée une troisième section d'extension radiale (22), qui s'étend dans la direction radiale R vers l'extérieur jusqu'à cette deuxième section d'extension radiale (21), et notamment dans la direction radiale R vers l'intérieur jusqu'à la profondeur T₁ de l'entaille fine (14).

6. Profil de bande de roulement selon les caractéristiques de l'une quelconque des revendications précédentes,
l'entaille fine (14) étant réalisée avec une profondeur maximale Tₘₐₓ, mesurée dans la direction radiale R, avec (1,5 T₁) ≥ Tₘₐₓ > T₁, et le fond d'entaille fine (19) s'étendant de manière essentiellement rectiligne, notamment étant orienté dans la première direction d'extension principale g, à la profondeur Tₘₐₓ le long des premières (15) et deuxièmes (16) sections d'extension de l'entaille fine (14).

7. Profil de bande de roulement selon les caractéristiques de l'une quelconque des revendications précédentes,
les premières sections d'extension (15) de l'entaille fine (14) formant chacune, avec leur extension dans la surface radialement extérieure (17), un angle α par rapport à la direction circonférentielle U, avec 0° ≤ α < 45°.

8. Profil de bande de roulement selon les caractéristiques de l'une quelconque des revendications précédentes,
les deuxièmes sections d'extension (16) de l'entaille fine (14) formant chacune, avec leur extension dans la surface radialement extérieure (17), un angle β par rapport à la direction circonférentielle U, avec 45° < β ≤ 90°.

9. Profil de bande de roulement selon les caractéristiques de l'une quelconque des revendications précédentes,
une première section d'extension (15) et une deuxième section d'extension consécutive (16) de l'entaille fine (14) dans la surface radialement extérieure (17) formant chacune un angle y, avec 45° ≤ γ ≤ 135°.

10. Profil de bande de roulement selon les caractéristiques de l'une quelconque des revendications précédentes,
la deuxième direction d'extension principale étant la direction radiale R.

11. Profil de bande de roulement selon les caractéristiques de l'une quelconque des revendications précédentes,
l'entaille fine (14) débouchant par une, notamment les deux, extrémité(s) d'extension formée(s) le long de sa première direction d'extension principale g dans une rainure (10, 11) délimitant l'élément de profil (13), notamment dans une rainure circonférentielle.
